# EUROPÄISCHE PATENTSCHRIFT

(11) **EP 0 368 215 B1**
(45) Veröffentlichungstag und Bekanntmachung des Hinweises auf die Patenterteilung: **08.09.1993**
(21) Anmeldenummer: 89120523.9
(22) Anmeldetag: 06.11.1989
(51) Int. Cl.: C08K 5/21, C08L 33/06, C08L 61/32, C09D 133/06, C09D 161/32

(54) **Hitzehärtbare, wässrige Kunstharz-Mischungen zur Beschichtung von Holzwerkstoffen**
Thermosetting aqueous synthetic resins for coating wooden materials
Résines synthétiques aqueuses thermodurcissables pour le revêtement de matériaux en bois

(30) Priorität: 09.11.1988 DE 3837965
(43) Veröffentlichungstag der Anmeldung: 16.05.1990
(73) Patentinhaber: BASF Aktiengesellschaft, 67063 Ludwigshafen (DE)
(72) Erfinder: Eisele, Wolfgang, Dr., D-6700 Ludwigshafen (DE); Etling, Hans, Dr., D-6701 Dannstadt-Schauernheim (DE); Pfalzgraf, Walter, D-6704 Mutterstadt (DE); Pitteroff, Walter, Dr., D-6719 Bobenheim (DE); Wittmann, Otto, D-6710 Frankenthal (DE)

(56) Entgegenhaltungen:
- EP-A- 0 002 044
- EP-A- 0 106 979
- DE-A- 2 635 732

## Beschreibung

Die vorliegende Erfindung betrifft hitzehärtbare, wäßrige Kunstharz-Mischungen zur Beschichtung von Holzwerkstoffen auf Basis von veretherten Melamin-Formaldehyd-Kondensationsprodukten und wäßrigen Kunstharz-Dispersionen sowie ein Verfahren zur Herstellung dieser Mischungen und die Verwendung zur Beschichtung von Holzwerkstoffen.

Zur Herstellung von Kunststoff-Furnieren, die auch als Finish-Folien oder Kanten-Folien bezeichnet werden, werden saugfähige Papiere mit hitzehärtbaren Aminoplastharz-Lösungen getränkt, im Heißluftstrom getrocknet und gehärtet und anschließend mit einer Lackschicht überzogen. Als hitzehärtbare Aminoplastharze werden in der Regel Harnstoff-Formaldehyd-Kondensationsprodukte verwendet, die gegebenenfalls mit anderen zur Aminoplastharzbildung befähigten Komponenten, wie beispielsweise Melamin, modifiziert sein können.

Um die erforderliche Lackierbarkeit zu gewährleisten und die Handhabbarkeit der Folien zu verbessern, werden der Aminoplastharz-Lösung üblicherweise 20 bis 80 Teile vernetzbare Komponenten enthaltenden Polymer-Dispersion zugesetzt. Derartige Aminoplastharz-Mischungen zeigen jedoch den Nachteil einer hohen Formaldehyd-Emission von über 0,1 ppm Formaldehyd (Ausgleichskonzentration im Prüfraum).

Es ist allgemein bekannt, den Grad der Formaldehyd-Emission bei Aminoplastharzen durch Zugabe von Harnstoff bzw. die Kondensation mit einem niedrigen Molverhältnis Formaldehyd : Harnstoff durchzuführen. Führt man diese Maßnahmen jedoch bei den für Finish-Folien geeigneten Harzmischungen durch, so wird die Feuchte- und Wasserresistenz sowie die Lackierbarkeit der für die Oberflächen-Veredlung eingesetzten Produkte über die zulässigen Toleranzgrenzen verringert, und sie sind für dieses Einsatzgebiet nicht mehr verwendungsfähig.

Weiterhin ist allgemein bekannt, daß man die Feuchte- und Wasserfestigkeit von Aminoplastharz-Produkten durch Mitverwendung von Melamin im Austausch von Harnstoff verbessern kann. Derart hergestellte Mischungen zeigen jedoch keine ausreichende Lagerstabilität wie sie für einen Versand vom Hersteller zum Verarbeiter und die dort erforderliche Bevorratung notwendig ist.

In der DE-OS 26 35 732 wird eine hitzehärtbares Harzsystem auf Basis eines Melamin-Formaldehyd-Vorkondensates und einer Copolymerisat-Dispersion beschrieben. Um die Komponenten des Systems verträglicher zu machen, ist bei der Herstellung des Copolymerisates ein spezielles Comonomeres der allgemeinen Formel I 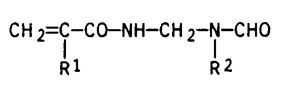
erforderlich. Obwohl diese Systeme "eine für die Weiterverarbeitung völlig ausreichende Topfzeit haben" sind sie nicht über einen längeren Zeitraum lagerstabil.

Aufgabe der vorliegenden Erfindung war es, eine hitzehärtbare, wäßrige Kunstharz-Mischung auf Basis von Melamin-Formaldehyd-Vorkondensaten und einer Copolymerisat-Dispersion zur Verfügung zu stellen, die sowohl über mehrere Wochen lagerstabil ist, als auch die Herstellung extrem formaldehydarmer Kunststoff-Furniere ermöglicht ohne Einbuße der übrigen Qualitätseigenschaften.

Gelöst wurde die Aufgabe durch Verwendung eines Melamin-Formaldehyd-Kondensationsproduktes mit einem Molverhältnis Melamin : Formaldehyd von 1 : 4,5 bis 5,8, das nahezu vollständig verethert ist.

Gegenstand der Erfindung ist eine hitzehärtbare, wäßrige Kunstharz-Mischung zur Beschichtung von Holzwerkstoffen, enthaltend
(A) 5 bis 50 Gew.-% eines veretherten Melamin-Formaldehyd-Kondensationsproduktes mit einem Molverhältnis Melamin : Formaldehyd von 1 : 4,5 bis 5,8
(B) 5 bis 60 Gew.-% eines in Form einer Dispersion vorliegenden und durch Kondensationsreaktion vernetzbaren Copolymerisates aus überwiegenden Anteilen von Acrylsäure- und/oder Methacrylsäurealkylestern, untergeordneten Anteilen von Comonomeren mit den zur Vernetzung befähigten Gruppen und sonstigen Comonomeren, und
(C) 10 bis 50 Gew.-% Harnstoff,
wobei sich die Mengenangaben der Komponenten (A), (B) und (C) auf 100 Gew.-% ergänzen und sich auf den Feststoffgehalt der wäßrigen Kunstharz-Mischung beziehen.

Die erfindungsgemäßen Kunstharz-Mischungen sind über einen längeren Zeitraum lagerstabil und ermöglichen auch die Herstellung extrem formaldehydarmer Kunststoff-Furniere ohne Einbuße der übrigen Qualitätseigenschaften. Die erzielbare niedrige Formaldehyd-Emission ist um so überraschender, als die zu verwendende Melamin-Formaldehyd-Harzkomponente in einem besonders hohen Molverhältnis Melamin : Formaldehyd von 1 : über 4 hergestellt wird.

Zu den Aufbaukomponenten ist im einzelnen folgendes auszuführen:
Als Aufbaukomponente (A) werden Melamin-Formaldehyd-Kondensationsprodukte verwendet mit einem Molverhältnis Melamin : Formaldehyd von 1 : 4,5 bis 5,8, bevorzugt 1 : 5 bis 5,5. Sie sind mit C₁- bis C₄-Alkanolen wie Methanol, Ethanol, Propanol und/oder Butanol verethert. Bevorzugt sind Methanol und Ethanol.

Die Herstellung der Aufbaukomponente (A) ist allgemein bekannt. Zunächst wird 1 Mol Melamin mit 6 bis 12 Mol Formaldehyd bei pH-Werten von 7 bis 9 und bei Temperaturen von 40 bis 80°C kondensiert, mit 20 bis 30 Mol Methanol versetzt und bei pH-Werten von 1 bis 5 und Temperaturen von 40 bis 80°C verethert. Die Kondensationsbedingungen richten sich nach der für das Harz gewünschten Wasserverdünnbarkeit, die mindestens 1 : 6 beträgt. Nach der Kondensation werden die Melamin-Harze durch Destillation von überschüssigem Methanol und Formaldehyd befreit. Eventuell vorhandener restlicher Formaldehyd wird bei Zusatz von Harnstoff (c) bei Temperaturen von Raumtemperatur bis 90°C, bevorzugt 60 bis 70°C umgesetzt.

Die Aufbaukomponente (A) wird in Mengen von 5 bis 50 Gew.-%, bevorzugt 20 bis 40 Gew.-% verwendet. Sie liegt als 60 bis 90 gew.-%ige wäßrige Lösung vor.

Als Aufbaukomponente (B) werden Copolymerisat-Dispersionen verwendet, deren Copolymerisate Carboxyl-, Hydroxy-, Amid-, Glycidyl-, Carbonyl-, N-Methylol-, N-Alkoxymethyl-, Amino- und/oder Hydrazogruppen enthalten. Die obengenannten funktionellen Gruppen im Copolymerisat werden auf übliche Weise durch Einpolymerisieren entsprechender Monomerer die diese funktionellen Gruppen tragen, erhalten.

Die Copolymerisate enthalten die obengenannten funktionellen Gruppen im allgemeinen in solchen Mengen, daß sie 0,1 bis 50, vorzugsweise 0,3 bis 15, bezogen auf das Copolymerisat, dieser Monomeren mit funktionellen Gruppen einpolymerisiert enthalten.

Als Comonomere der Monomeren mit den obengenannten funktionellen Gruppen eignen sich die üblichen, damit copolymerisierbaren olefinisch ungesättigten Monomeren, z.B. C₁- bis C₁₂-Alkylester der Acrylsäure und Methacrylsäure, bevorzugt C₁- bis C₈-Alkylester, z.B. Methylacrylat, Methylmethacrylat, Ethylacrylat, Ethylmethacrylat, Propylacrylat, Propylmethacrylat, Butylacrylat, Butylmethacrylat, 2-Ethylhexylacrylat, 2-Ethylhexylmethacrylat, Laurylacrylat und Laurylmethacrylat; Vinylester von C₂- bis C₄-Carbonsäuren, z.B. Vinylacetat und Vinylpropionat, C₁- bis C₄-Dialkylester der Maleinsäure und Fumarsäure, Vinylaromaten wie Styrol, α-Methylstyrol, Vinyltoluol; Acrylnitril, Methacrylnitril, in geringen Mengen von bis zu 5 Gew.-% des Copolymeren Acrylamid, Methacrylamid sowie Vinylether mit 3 bis 10 Kohlenstoffatomen, Vinylhalogenide wie Vinylchlorid und Vinylidenchlorid; mehrfach olefinisch ungesättigte Verbindungen wie Butadien und Isopren sowie Gemische der obgenannten Monomeren, soweit sie miteinander copolymerisierbar sind. Bevorzugte Comonomere sind Acrylsäureester, Methacrylsäureester, Acrylnitril, Methacrylnitril, Vinylchlorid, Vinylidenchlorid, Styrol und Butadien.

Die Aufbaukomponente (B) wird in Mengen von 5 bis 60 Gew.-%, bevorzugt 20 bis 50 Gew.-% verwendet. Sie liegt als 40 bis 60 gew.-%ige wäßrige Dispersion vor.

Als Komponente (C) wird Harnstoff in einer Menge von 10 bis 50 Gew.-%, bevorzugt 20 bis 40 Gew.-% verwendet. Er kann in fester Form oder als wäßrige Lösung verwendet werden.

Zur Herstellung der Kunstharz-Mischung werden die Komponenten (A) und (C) unter Rühren bei Raumtemperatur bis 90°C gemischt, auf Raumtemperatur abkühlen lassen, mit der Komponente (B) gemischt und durch Zugabe von anorganischen oder organischen Basen auf einen pH-Wert von 7 bis 9 eingestellt.

Es können aber auch alle drei Komponenten (A), (B) und (C) unter Rühren bei Raumtemperatur bis 90°C gemischt und auf einen pH-Wert von 7 bis 9 eingestellt werden.

Die erhaltenen wäßrigen Kunstharz-Mischungen weisen einen Feststoffgehalt von 40 bis 60 Gew.-%, bevorzugt 45 bis 55 Gew.-% auf. Sie sind unbegrenzt wasserverdünnbar. Der Kunstharzmischung können noch bis zu 5 Gew.-% weiterer Modifizierungs- und Hilfsmittel wie Härter, weitere Vernetzer oder Lösemittel zugesetzt werden.

Bei der Verwendung der Kunstharz-Mischung zur Herstellung von Finish-Folien werden in an sich bekannter Weise saugfähige Papiere mit einer erfindungsgemäßen Kunstharz-Mischung getränkt, im Heißluftstrom bei Temperaturen von 140 bis 200 °C getrocknet und gehärtet. Diese Folien werden anschließend mit konventionellen Lacken vom Typ SH oder DU lackiert. Die fertigen Folien werden bei Temperaturen von Raumtemperatur bis 180°C und Drücken von 2 bis 15 N/cm² auf Holzwerkstoffe wie Spanplattenträger aufgeleimt. Die Formaldehydemission der Oberfläche liegt nach der "Gasanalysen-Methode" unter 0,5 mg/m² x Std.. Die Oberflächen sind klar und hochglänzend und zeigen eine niedrige Wasseraufnahme bei guten mechanischen Eigenschaftswerten.

### Beispiele

Komponente (A): Melamin-Formaldehyd-Kondensationsprodukt 126 g (1 Mol) Melamin wurde in Gegenwart von 270 g (9 Mol) Formaldehyd bei einem pH-Wert von 8,5 und Temperaturen von 40 bis 70°C methyloliert. Die erhaltene Additionsverbindung wurde mit Ameisensäure auf einen pH-Wert von 4 eingestellt und bei Temperaturen von 60°C mit 900 g Methanol während einer Dauer von 15 min verethert. Nach Neutralisation mit Natronlauge wurde die Reaktionslösung durch Einengen (Destillation) von dem nichtumgesetzten Formaldehyd sowie dem überschüssigen Methanol befreit.

### Komponente (B): Copolymerisat-Dispersion

Ein Gemisch von 450 g Acrylsäure n-Buthylester, 20 g Acrylsäure, 480 g Styrol und 30 g Acrylamid wurde in an sich bekannter Weise in Gegenwart von 2 Gew.-% eines anionaktiven Emulgators und 0,5 Gew.-% eines Alkaliperoxidisulfats zu einer wasserverdünnbaren Copolymerisat-Dispersion mit einem Feststoffgehalt von 50 Gew.-% polymerisiert.

### Beispiel 1

### Kunstharz-Mischung 1

20 g des unter (A) genannten Melamin-Formaldehyd-Kondensationsproduktes, 30 g einer 68,2 gew.-%igen Harnstofflösung, 10,7 g entsalztes Wasser wurden unter Rühren bei einer Temperatur von etwa 70°C gemischt, danach auf Raumtemperatur abgekühlt und durch Zugabe von Natriumhydroxidlösung auf einen pH-Wert von 8 bis 9 eingestellt. Anschließend wurde dieser Lösung 48 g der Copolymerisat-Dispersion (B) beigemischt. Die erhaltene Kunstharz-Mischung wies einen Feststoffgehalt von ca. 50 Gew.-% und eine Viskosität von 9 mPas auf. Sie war unendlich wasserverdünnbar und bei Raumtemperatur mehr als 8 Wochen lagerstabil.

### Beispiel 2

### Kunstharz-Mischung 2

30 g des unter Komponente A genannten Melamin-Formaldehyd-Kondensationsproduktes, 25 g einer 68,2 gew.-%igen Harnstofflösung, 28 g entsalztes Wasser wurden bei ca. 70°C gerührt und nach ca. 15 min auf Raumtemperatur (25°C) abgekühlt. Die so erhaltene Harzlösung wurde mit 30 g der Copolymerisat-Dispersion B gemischt und durch Zugabe von 10 gew.-%iger Natriumhydroxidlösung auf einen pH-Wert von 8,4 eingestellt. Die Harzmischung hatte einen Feststoffgehalt von 53 Gew.-% und eine Viskosität von 15 mPa.s; sie war auch nach 8 Wochen Lagerung bei Raumtemperatur noch beliebig mit Wasser verdünnbar ohne zu koagulieren.

### Beispiel 3

### Anwendungsbeispiel

Mit den Kunstharz-Mischungen 1 und 2 wurden nach Zusatz von je 18 bzw. 20 g Wasser und je 3,5 g Härter (34 gew.-%ige Ameisensäure) Dekorpapiere mit einem Gewicht von 80 g pro m² so imprägniert und getrocknet, daß die Dekorpapiere einen Festharzauftrag von 48 bis 52 Gew.-% aufwiesen. Die imprägnierten Papiere erhielten eine Lackdeckstrich (15 g/m²) mit einem Strukturlack auf SH-Basis (Melamin-Formaldehyd-Harz) und wurden mit einem Klebstoff auf Polyvinylacetat-Basis (Weißleim) auf eine handelsübliche Holzspanplatte der Emissionsklasse E1 aufgeleimt. An den so beschichteten Werkstoffen wurde die Formaldehydabgabe (DIN 52 368 Gasanalyse) ermittelt. An den Kunststoff-Furnieren wurde ferner die Wasseraufnahme nach einer Stunde Wasserlagerung bei 20°C bestimmt.

### Beispiel 4

### Vergleichsbeispiel

Aus 50 g eines im Handel erhältlichen Harnstoff-Formaldehyd-Harzes mit einem Molverhältnis U : F von 1 : 1,6 und 45 g der Copolymerisat-Dispersion (B) wurde eine Imprägnierflotte gemischt, der noch 0,8 g eines Härtungskatalysators (Ammoniumchlorid) zugesetzt wurden. Mit dieser Imprägnierflotte wurden Dekorpapiere mit einem Gewicht von 80 g/m² so getränkt, daß ein Festharzauftrag von ca. 50 Gew.-% entstand. Nach dem Lackieren mit dem im Beispiel 3 aufgeführten säurehärtenden Strukturlack (SH) wurde dieses Kunststoff-Furnier mit Weißleim auf eine Spanplatte der Emissionsklasse E1 aufgeleimt. Gemessen wurde ebenfalls die Wasseraufnahme und die Formaldehydabgabe.

### Ergebnisse:

| | Formaldehydabgabe nach DIN 52 368 | Wasseraufnahme nach 1 h Wasserlagerung 20°C |
|---|---|---|
| Harzmischung 1 Beispiel 1 | 0,21 mg FA/m².h | 8 % |
| Harzmischung 2 Beispiel 2 | 0,45 mg FA/m².h | 9 % |
| Vergleichsbeispiel Beispiel 4 | 9 mg FA/m².h | 12 % |

Die erfindungsgemäßen Kunstharzmischungen gemäß Beispiel 1 und 2 waren lagerstabil und konnten auch nach 8 Wochen ohne Beeinträchtigung des Penetrationsvermögens zu Oberflächenbeschichtungsmaterial verarbeitet werden, das eine vernachlässigbare Formaldehydabgabe aufweist und dennoch sehr wasserbeständig ist.

## Patentansprüche

1. Hitzehärtbare, wäßrige Kunstharz-Mischung zur Beschichtung von Holzwerkstoffen, enthaltend
(A) 5 bis 50 Gew.-% eines veretherten Melamin-Formaldehyd-Kondensationsproduktes mit einem Molverhältnis Melamin : Formaldehyd von 1 : 4,5 bis 5,8.
(B) 5 bis 60 Gew.-% eines in Form einer wäßrigen Dispersion vorliegenden und durch Kondensationsreaktion vernetzbaren Copolymerisates aus überwiegenden Anteilen von Acrylsäure- und/oder Methacrylsäure-alkylestern, untergeordneten Anteilen von Comonomeren mit den zur Vernetzung befähigten Gruppen und sonstigen Comonomeren, und
(C) 10 bis 50 Gew.-% Harnstoff,
wobei sich die Mengenangaben der Komponenten (A), (B) und (C) auf 100 Gew.-% ergänzen und sich auf den Feststoffgehalt der wäßrigen Kunstharz-Mischung beziehen.

2. Kunstharz-Mischung nach Anspruch 1, enthaltend ein mit C₁- bis C₄-Alkanolen verethertes Melamin-Formaldehyd-Kondensationsprodukt als Komponente (A).

3. Kunstharz-Mischung nach Anspruch 1 oder 2, enthaltend ein mit Methanol verethertes Melamin-Formaldehyd-Kondensationsprodukt als Komponente (A).

4. Kunstharz-Mischung nach einem der Ansprüche 1 bis 3, enthaltend ein Melamin-Formaldehyd-Kondensationsprodukt mit einem Molverhältnis Melamin : Formaldehyd von 1 : 5 bis 5,5 als Komponente (A).

5. Kunstharz-Mischung nach einem der Ansprüche 1 bis 4, enthaltend Copolymerisat-Dispersionen, deren Copolymerisate Carboxyl-, Hydroxyl-, Amid-, Glycidyl-, Carbonyl-, N-Methylol-, N-Alkoxymethyl-, Amino- und/oder Hydrazogruppen enthalten, als Komponente (B).

6. Kunstharz-Mischungen nach einem der Ansprüche 1 bis 5, enthaltend
20 bis 40 Gew.-% Komponente (A)
20 bis 50 Gew.-% Komponente (B) und
20 bis 40 Gew.-% Harnstoff (C).

7. Verfahren zur Herstellung von lagerstabilen, hitzehärtbaren, wäßrigen Kunstharz-Mischungen gemäß einem der Ansprüche 1 bis 6, dadurch gekennzeichnet, daß man
5 bis 50 Gew.-% eines in Form einer 60 bis 90 gew.-%igen wäßrigen Lösung vorliegenden veretherten Melamin-Formaldehyd-Kondensationsproduktes (A), erhältlich durch Kondensation in wäßriger Lösung von 1 Mol Melamin mit 6 bis 12 Mol Formaldehyd bei einem pH-Wert von 8 bis 9 und bei Temperaturen von 40 bis 80°C methyloliert und die so erhaltene Additionsverbindung bei einem pH-Wert von 1 bis 5 mit 20 bis 30 Mol C₁- bis C₄-Alkanolen verethert, überschüssiges Methanol und Formaldehyd abdestilliert,
10 bis 50 Gew.-% Harnstoff (C) bei 20 bis 90°C unter Rühren zugibt, auf Raumtemperatur abkühlen läßt und mit
5 bis 60 Gew.-% eines in Form einer Dispersion vorliegenden und durch Kondensationsreaktion vernetzbaren Copolymerisates (B) aus überwiegenden Anteilen von Acrylsäure- und/oder Methacrylsäurealkylestern, untergeordneten Anteilen von Comonomeren mit den zur Vernetzung befähigten Gruppen und sonstigen Comonomeren unter Rühren mischt und den pH-Wert der Mischung auf 7 bis 9 einstellt, wobei sich die Mengenangaben der Komponenten (A), (B), und (C) auf 100 Gew.-% ergänzen, und sich auf den Feststoffgehalt der wäßrigen Kunstharz-Mischung beziehen.

8. Verfahren zur Beschichtung von Holzwerkstoffen, dadurch gekennzeichnet, daß man eine Kunstharz-Mischung gemäß einem der Ansprüche 1 bis 6 verwendet.

9. Verfahren zur Herstellung von Finish-Folien für die Beschichtung von Holzwerkstoffen, dadurch gekennzeichnet, daß man eine Kunstharz-Mischung gemäß einem der Ansprüche 1 bis 6 verwendet.

## Claims

1. A heat-curable, aqueous synthetic resin mixture for coating woodbase materials, comprising
(A) from 5 to 50% by weight of an etherified melamine/formaldehyde condensate having a molar ratio of melamine to formaldehyde of from 1 : 4.5 to 1 : 5.8,
(B) from 5 to 60% by weight of a copolymer which is present in the form of an aqueous dispersion, is crosslinkable by a condensation reaction and consists of predominant amounts of alkyl acrylates and/or methacrylates, minor amounts of comonomers having groups capable of crosslinking and other comonomers, and
(C) from 10 to 50% by weight of urea,
the amounts of components (A), (B) and (C) summing to 100% by weight and being based on the solids content of the aqueous synthetic resin mixture.

2. A synthetic resin mixture as claimed in claim 1 or 2, containing, as component (A), a melamine/formaldehyde condensate etherified with C₁-C₄-alkanols.

3. A synthetic resin mixture as claimed in claim 1 or 2, containing, as component (A), a melamine/formaldehyde condensate etherified with methanol.

4. A synthetic resin mixture as claimed in any of claims 1 to 3, containing, as component (A), a melamine/formaldehyde condensate having a molar ratio of melamine to formaldehyde of from 1 : 5 to 1 : 5.5.

5. A synthetic resin mixture as claimed in any of claims 1 to 4, containing, as component (B), a copolymer dispersion whose copolymer contains carboxyl, hydroxyl, amide, glycidyl, carbonyl, N-methylol, N-alkoxymethyl, amino and/or hydrazo groups.

6. A synthetic resin mixture as claimed in any of claims 1 to 5, containing
from 20 to 40% by weight of component (A),
from 20 to 50% by weight of component (B) and
from 20 to 40% by weight of urea (C).

7. A process for the preparation of a heat-curable, aqueous synthetic resin mixture having a long shelf life, as claimed in any of claims 1 to 6, wherein from 5 to 50% by weight of an etherified melamine/formaldehyde condensate (A), present in the form of a 60-90% strength by weight aqueous solution and obtainable by condensation of 1 mole of melamine with from 6 to 12 moles of formaldehyde in aqueous solution at a pH of from 8 to 9 and at from 40 to 80°C, are methylolated and the resulting adduct is etherified at a pH of from 1 to 5 with from 20 to 30 moles of C₁-C₄-alkanols, excess methanol and formaldehyde are distilled off, from 10 to 50% by weight of urea (C) are added at from 20 to 90°C while stirring, the mixture is left to cool to room temperature and is mixed, with stirring, with from 5 to 60% by weight of a copolymer (B) which is present in the form of a dispersion, is crosslinkable by a condensation reaction and consists of predominant amounts of alkyl acrylates and/or methacrylates, minor amounts of comonomers having groups capable of crosslinking and other comonomers, and the pH of the mixture is brought to 7-9, the amounts of components (A), (B) and (C) summing to 100% by weight and being based on the solids content of the aqueous synthetic resin mixture.

8. A process for coating woodbase materials, wherein a synthetic resin mixture as claimed in any of claims 1 to 6 is used.

9. A process for the production of a finishing foil for coating woodbase materials, wherein a synthetic resin mixture as claimed in any of claims 1 to 6 is used.

## Revendications

1. Mélange de matières plastiques aqueux et durcissable à la chaleur pour le revêtement de matériaux dérivés du bois, contenant :
(A) 5 à 50% en poids d'un produit de condensation de la mélamine et du formaldéhyde, éthérifié, présentant un rapport molaire mélamine:formaldéhyde de 1:4,5 à 5,8,
(B) 5 à 60% en poids d'un copolymère réticulable par une réaction de condensation et se présentant sous forme d'une dispersion aqueuse, constitué de proportions principales d'esters alkyliques de l'acide acrylique et/ou de l'acide méthacrylique, de proportions mineures de comonomères avec les radicaux aptes à la réticulation et d'autres comonomères, et
(C) 10 à 50% en poids d'urée,
où les proportions indiquées des composants (A), (B) et (C) se complètent pour faire 100% en poids et se rapportent à la teneur en corps solides du mélange aqueux de matières plastiques.

2. Mélange de matières plastiques suivant la revendication 1, qui contient un produit de condensation de la mélamine et du formaldéhyde éthérifié avec des alcanols en C₁-C₄ à titre de composant (A).

3. Mélange de matières plastiques suivant la revendication 1 ou 2, caractérisé en ce qu'il contient un produit de condensation de la mélamine et du formaldéhyde éthérifié avec le méthanol à titre de composant (A).

4. Mélange de matières plastiques suivant l'une quelconque des revendications 1 à 3, caractérisé en ce qu'il contient un produit de condensation de la mélamine avec du formaldéhyde présentant un rapport molaire mélamine:formaldéhyde de 1:5 à 5,5 à titre de composant (A).

5. Mélange de matières plastiques suivant l'une quelconque des revendications 1 à 4, caractérisé en ce qu'il contient des dispersions de copolymères dont les copolymères contiennent des radicaux carboxyle, hydroxyle, amide, glycidyle, carbonyle, N-méthylol, N-alcoxyméthyle, amino et/ou hydrazo, à titre de composant (B).

6. Mélange de matières plastiques suivant l'une quelconque des revendications 1 à 5, caractérisé en ce qu'il contient :
20 à 40% en poids du composant (A),
20 à 50% en poids du composant (B), et
20 à 40% en poids d'urée (C).

7. Procédé de préparation de mélanges de matières plastiques aqueux, durcissables à la chaleur et stables à la conservation, suivant l'une quelconque des revendications 1 à 6, caractérisé en ce que
on procède à la méthylolation de 5 à 50% en poids d'un produit de condensation de la mélamine et du formaldéhyde éthérifié et se présentant sous forme d'une solution aqueuse à 60-90% en poids (A), que l'on peut obtenir par la condensation en solution aqueuse de 1 mode de mélamine avec 6 à 12 modes de formaldéhyde, à une valeur de pH de 8 à 9 et à des températures de 40 à 80°C et on éthérifie le composé d'addition ainsi obtenu, à une valeur de pH de 1 à 5, à l'aide de 20 à 30 moles d'alcanol en C₁-C₄, on chasse le formaldéhyde et le méthanol en excès par distillation,
on ajoute 10 à 50% en poids d'urée (C) à 20-90°C et sous agitation, on laisse refroidir le mélange résultant jusqu'à la température ambiante, et
on de mélange, sous agitation, avec 5 à 60% en poids d'un copolymère réticudable par une réaction de condensation et se présentant sous forme d'une dispersion (B) constituée de proportions principales d'esters alkyliques de l'acide acrylique et/ou de l'acide méthacrylique, de proportions mineures de comonomères avec les radicaux aptes à la réticulation et d'autres comonomères et on règle la valeur du pH du mélange à 7-9, où les proportions indiquées des composants (A), (B) et (C) se complètent pour faire 100% en poids et se rapportent à la teneur en corps solides du mélange aqueux de matières plastiques.

8. Procédé de revêtement de matériaux dérivés du bois, caractérisé en ce que l'on utilise un mélange de matières plastiques suivant l'une quelconque des revendications 1 à 6.

9. Procédé de préparation de feuilles de finition pour le revêtement de matériaux dérivés du bois, caractérisé en ce que l'on utilise un mélange de matières plastiques suivant l'une quelconque des revendications 1 à 6.
